# EUROPÄISCHE PATENTANMELDUNG

(11) **EP 1 561 922 A1**
(43) Veröffentlichungstag der Anmeldung: **10.08.2005**
(21) Anmeldenummer: 05002078.3
(22) Anmeldetag: 02.02.2005
(51) Int. Cl.: F01N 9/00, F01N 3/023, F02D 41/02, F01N 3/035, F01N 3/029

(54) **Verfahren zur Regeneration eines Partikelfilters und Abgasreinigungssystems mit Partikelfilter**

(30) Priorität: 04.02.2004 DE 102004005321
(71) Anmelder: DaimlerChrysler AG, 70567 Stuttgart (DE)
(72) Erfinder: Bodo, Thilo-Ralf, 71364 Winnenden (DE); Duvinage, Frank, Dr., 73230 Kirchheim (DE); Nolte, Arno, 70188 Stuttgart (DE); Paule, Markus, 71404 Korb (DE)

(57) **Zusammenfassung**

Die Erfindung betrifft ein Verfahren zur Regeneration eines Partikelfilters oder -Abscheiders im Abgastrakt einer Brennkraftmaschine.

Bei dem erfindungsgemäßen Verfahren wird mittels einer Regelungs-/Steuerungsvorrichtung eine periodische Regeneration des Partikelfilters oder -Abscheiders vorgenommen, wobei die Regeneration eine erste Rußabbrandphase und eine zweite Rußabbrandphase umfasst, wobei von der Regelungs-/ Steuerungsvorrichtung in der ersten Rußabbrandphase eine erste Rußabbrandgeschwindigkeit und in der zweiten Rußabbrandphase eine gegenüber der ersten Rußabbrandgeschwindigkeit höhere, zweite Rußabbrandgeschwindigkeit eingestellt wird.

## Beschreibung

Die vorliegende Erfindung betrifft ein Verfahren zur periodischen Regeneration eines Partikelfilters bzw. eines Partikelabscheiders mit den Merkmalen des Oberbegriffs des Anspruchs 1 und zum anderen ein Abgasreinigungssystem mit Partikelfilter mit den Merkmalen des Oberbegriffs des Anspruchs 9.

Aus der DE 101 44 958 A1 ist ein Verfahren zur Regeneration eines im Abgastrakt einer Dieselbrennkraftmaschine angeordneten Partikelfilters bekannt, bei dem für die im Partikelfilter angesammelten Partikel ein einheitlicher Abbrandvorgang durchgeführt wird, bei dem die Temperatur im Partikelfilter zur chemischen Umsetzung der Partikel erhöht wird. Es erfolgt eine Begrenzung der Abbrandgeschwindigkeit oder ein Löschen der Verbrennung durch eine Verminderung der Sauerstoffkonzentration des Abgases vor dem Partikelfilter, wenn die Temperatur im Filter bzw. ein Temperaturgradient eine vorgegebene Schwelle überschreitet. Die Verminderung der Sauerstoffkonzentration des Abgases vor dem Partikelfilter wird über brennkraftmaschinenseitige Maßnahmen wie Absenkung eines Luftladedrucks, Erhöhung einer Abgasrückführungsrate etc. erzielt.

Aus der DE 38 32 790 C2 ist ein Verfahren zur Regeneration eines im Abgastrakt einer Dieselbrennkraftmaschine angeordneten Partikelfilters bekannt, bei dem eine (Ist-)Abgastemperatur vor und hinter dem Partikelfilter erfasst und als Regelgröße zur Überwachung des Regenerationsvorgangs, insbesondere zur Vermeidung einer unkontrollierten Regenerationsreaktion benutzt wird. Ein zugehöriger Soll-Abgastemperaturwert wird in Abhängigkeit von einem Druckabfall des Abgasstroms am Filter verändert, wobei der Druckabfall wiederum vom zeitlich veränderlichen Betriebszustand der Dieselbrennkraftmaschine abhängig sein soll. Zur Beeinflussung des Regenerationsprozesses sind ein Drosseln des Abgases vor dem Filter sowie ein Einstellen des Luftverhältnisses im Abgas vorgeschlagen. Eine Untergliederung des Regenerationsvorgangs ist nicht vorgesehen.

Aus der DE 100 33 159 A1 ist ebenfalls ein Verfahren zur Regeneration eines im Abgasstrang einer Brennkraftmaschine angeordneten Partikelfilters bekannt, bei dem die Abgastemperatur vor und hinter dem Partikelfilter erfasst und als Regelgröße zur Überwachung des Regenerationsvorgangs, insbesondere zur Vermeidung einer unkontrollierten Regenerationsreaktion benutzt wird. In Abhängigkeit von den Temperaturen am Partikelfilter werden Einspritzvorgänge seitens der Brennkraftmaschine ausgelöst bzw. verändert, wobei nacheingespritzter Kraftstoff an einem dem Partikelfilter vorgeschalteten Oxidationskatalysator umgesetzt wird.

Schließlich ist aus der DE 100 33 158 C1 eine Brennkraftmaschine mit einem Abgastrakt bekannt, in dem ein mit Hilfe einer Steuerungsvorrichtung regenerierbarer Partikelfilter vorgesehen ist. Die Steuerungsvorrichtung bewirkt eine in zwei Phasen, eine erste Heizphase und eine nachfolgende Abbrandphase, aufgeteilte Regeneration, deren Heizphase vom Betriebszustand der Brennkraftmaschine abhängig gemacht ist. Zur raschen Einstellung günstiger Temperaturen soll die Aufheizphase nicht in einem Leerlaufbetriebszustand der Brennkraftmaschine, sondern bevorzugt in einem mittleren oder höheren Lastbereich der Brennkraftmaschine stattfinden. Dem gegenüber erfolgt die Abbrandphase nach erfolgreicher Heizphase, d.h. nach einem Erreichen einer Mindesttemperatur im Filter, wobei sodann unabhängig von der Last der Brennkraftmaschine eine Anpassung des Sauerstoffgehalts im Abgas mittels Änderung von Ladedruck oder Abgasrückführung zur Beeinflussung des Abbrandes vorgesehen sind.

Problematisch ist bei bekannten Systemen, dass die an sich gewünschte (exotherm ablaufende) chemische Reaktion auf dem Partikelfilter, nämlich die Oxidation von abgelagertem Ruß und dergleichen, bei entsprechenden Randbedingungen derart lawinenartig unkontrollierbar ablaufen kann, dass Temperaturspitzen auftreten können, die zu einer Schädigung des Partikelfilters führen.

Aufgabe der Erfindung ist es, ein Verfahren zur Regeneration eines Partikelfilters bzw. eines Partikelabscheiders im Abgastrakt einer Brennkraftmaschine bereitzustellen, bei dem zum einen eine besonders effektive Regeneration bei zugleich langen Regenerationsintervallen und zum anderen ein wirkungsvoller Schutz vor einer unkontrollierbaren Regenerationsreaktion erreicht werden. Ferner ist es Aufgabe der Erfindung, ein Abgasreinigungssystem mit einem Partikelfilter zur Verfügung zu stellen, mit welchem eine Schädigung des Partikelfilters bei der Regeneration sicher vermieden wird.

Die Aufgabe wird durch ein Verfahren mit den Merkmalen des Anspruchs 1 und durch ein Abgasreinigungssystem mit den Merkmalen des Anspruchs 9 gelöst.

Bei dem erfindungsgemäßen Verfahren wird von einer Regelungs/Steuerungsvorrichtung eine periodische Regeneration des Partikelfilters oder Partikelabscheiders vorgenommen, wobei die Regeneration eine erste Rußabbrandphase und eine zweite Rußabbrandphase umfasst und von der Regelungs-/ Steuerungsvorrichtung in der ersten Rußabbrandphase eine erste Rußabbrandgeschwindigkeit und in der zweiten Rußabbrandphase eine gegenüber der ersten Rußabbrandgeschwindigkeit höhere, zweite Rußabbrandgeschwindigkeit eingestellt wird. Vorzugsweise ist der Partikelfilter oder -Abscheider im Abgastrakt einer Kraftfahrzeug-Brennkraftmaschine angeordnet und die Regeneration besteht im wesentlichen aus einem Abbrand des auf oder in dem Partikelfilter oder -Abscheider abgelagerten Rußes. Auf Grund der beim Betrieb der Brennkraftmaschine allmählich zunehmenden Beladung des Partikelfilters oder -Abscheiders, insbesondere mit bei der Verbrennung entstandenem Ruß, sind periodische Regenerationsvorgänge erforderlich. Dabei ist die Bezeichnung periodisch hier in dem erweiterten Sinn von in mehr oder weniger regelmäßigen Abständen durchgeführten Regenerationsvorgängen zu verstehen.

In der ersten Rußabbrandphase der Regeneration wird dabei eine moderate Umsetzungsrate des Rußes eingestellt, die nur so hoch ist, dass keine unkontrollierte Reaktion stattfinden kann bzw. eine ausreichende immanente Sicherheit gegen das Ablaufen einer unkontrollierbaren Reaktion gegeben ist. In der zweiten Rußabbrandphase wird dagegen eine höhere, vorzugsweise eine möglichst schnelle Reaktion eingestellt. Auf diese Weise wird einerseits sichergestellt, dass die durch den exothermen Rußabbrand auftretende Wärmefreisetzung bzw. Temperaturerhöhung derart begrenzt ist, dass eine Schädigung des Partikelfilters- oder Abscheiders sicher vermieden wird. Andererseits wird erreicht, dass die Regeneration in vergleichsweise kurzer Zeit durchführbar ist, so dass die zur Durchführung der Regeneration erforderlichen verbrauchsungünstigen Betriebsbedingungen nur so lange als notwendig eingestellt sind. Durch die erfindungsgemäße Vorgehensweise findet in der ersten Rußabbrandphase zunächst ein jederzeit kontrollierbarer Abbrand statt. Nach dem Übergang zur zweiten Rußabbrandphase erfolgt ein beschleunigter Abbrand zum einen unter günstigen Bedingungen und zum anderen bei einer unkritischen, reduzierten Partikelfilter- (Rest-) Beladung, bei der eine unkontrollierbare Reaktion nicht oder wenigstens nur bei reduzierten Mengenverhältnissen stattfindet.

In Ausgestaltung der Erfindung wird die zweite Rußabbrandphase in einem gegenüber der ersten Rußabbrandphase höheren Temperaturbereich durchgeführt. Dabei kann die Einstellung der höheren Temperatur der zweiten Rußabbrandphase beispielsweise durch eine Veränderung des Verbrennungsablaufes der Brennkraftmaschine erfolgen. Hierfür ist es zweckmäßig, eine Nacheinspritzung von Kraftstoff vorzunehmen, durch welche ein heißeres Abgas, gegebenenfalls durch Nachoxidation an einem dem Partikelfilter vorgeschalteten Oxidationskatalysator, erhalten wird. Gleichfalls möglich und vorteilhaft sind weitere oder andere Veränderungen des Brennkraftmaschinenbetriebs durch die Regelungs-/Steuervorrichtung. Beispielsweise kann eine saugseitige oder abgasseitige Androsselung erfolgen. Durch die Einstellung einer höheren Abgastemperatur bzw. Partikelfiltertemperatur wird die Abbrandrate des abgelagerten Rußes entsprechend erhöht und damit der Regenerationsvorgang rasch zu Ende geführt. Durch die zuvor in der ersten Rußabbrandphase vorgenommene Verminderung der insgesamt im Partikelfilter vorhandenen Rußmenge wird die in der zweiten Rußabbrandphase insgesamt freigesetzte Wärmemenge jedoch derart begrenzt, dass eine Schädigung des Partikelfilters sicher vermieden wird.

In weiterer Ausgestaltung der Erfindung wird die zweite Rußabbrandphase bei einem gegenüber der ersten Rußabbrandphase höheren Sauerstoffgehalt des Abgases durchgeführt. Da die Rußabbrandgeschwindigkeit sowohl von der Temperatur als auch vom Sauerstoffgehalt des Abgases abhängt, ist es vorteilhaft, diese wechselseitige Abhängigkeit zu berücksichtigen. Hierzu kann eine vorab die Abhängigkeit der Rußabbrandgeschwindigkeit von der Temperatur und dem Sauerstoffgehalt des Abgases ermittelt werden und die Daten der Regelungs-/ Steuerungsvorrichtung zur Verfügung gestellt werden, um bei der Regeneration die angestrebte Rußabbrandgeschwindigkeit einzustellen. Die Einstellung des angestrebten Sauerstoffgehalts des Abgases kann beispielsweise durch eine ansaugseitige Androsselung der Brennkraftmaschine oder durch eine geeignete Veränderung des Abgasrückführrate erreicht werden. Weiter ist es vorteilhaft, zur Einstellung der gewünschten Rußabbrandgeschwindigkeit den Einfluss des aktuellen Abgasmassenstroms zu berücksichtigen. Dadurch wird eine weiter erhöhte Sicherheit gegen unkontrollierte Reaktionen in der ersten Rußabbrandphase und eine hohe Rußabbrandgeschwindigkeit in der zweiten Rußabbrandphase erzielt.

In weiterer Ausgestaltung der Erfindung wird eine Umschaltung von der ersten Rußabbrandphase zur zweiten Rußabbrandphase der Regeneration in Abhängigkeit von der Beladung, insbesondere der Rußbeladung des Partikelfilters oder -Abscheiders vorgenommen. Es sind eine Mindestabbrandmenge in der ersten Rußabbrandphase und/oder eine maximale Restbeladung des Partikelfilters oder -Abscheiders zu fordern, um sicherzustellen, dass in der zweiten Rußabbrandphase trotz hoher Reaktionsraten ein Auftreten unerwünschter Temperaturspitzen vermieden wird. Letzteres ist insbesondere dann gewährleistet, wenn die Rußbeladung des Filters nur noch einen Bruchteil ihres Maximums, beispielsweise weniger als 50% beträgt. Dabei ist es vorteilhaft, auch den Anteil der Aschebeladung an der gesamten Beladung des Partikelfilters zu berücksichtigen

In weiterer Ausgestaltung der Erfindung wird eine Umschaltung von der ersten Rußabbrandphase zur zweiten Rußabbrandphase der Regeneration in Abhängigkeit von der Zeit vorgenommen, insbesondere nach Ablauf einer Mindestzeitspanne für die erste Rußabbrandphase der Regeneration. Dadurch wird sichergestellt, dass im Rahmen der ersten Rußabbrandphase ein ausreichender Abbrand erfolgen konnte und entsprechend reduzierte Restmengen an Beladung im Partikelfilter verblieben sind. Eine zeitliche Steuerung des Starts der zweiten Rußabbrandphase kann besonders vorteilhaft kombiniert werden mit einer Beladungserkennung und/oder einer mathematischen Modellierung der Beladung bzw. der Regeneration.

In weiterer Ausgestaltung der Erfindung wird die erste Rußabbrandphase der Regeneration bei Temperaturen zwischen 450°C und 650°C, insbesondere vorzugsweise bei Verwendung eines Additivs zwischen 450°C und 550°C durchgeführt. Dadurch ist sichergestellt, dass eine geringe Wahrscheinlichkeit für eine unkontrollierbare Reaktion auf dem Partikelfilter oder -Abscheider besteht, wobei dennoch eine effektive Regeneration erfolgt.

In weiterer Ausgestaltung der Erfindung wird die zweite Rußabbrandphase der Regeneration bei einer Temperatur zwischen 620°C und 800°C, insbesondere vorzugsweise mit Verwendung eines Additivs zwischen 550°C und 650°C durchgeführt. Zwischen erster und zweiter Phase können mehrere Zwischenphasen zur schrittweisen Anhebung der Regenerationstemperatur vorgesehen sein.

In weiterer Ausgestaltung der Erfindung wird eine Umschaltung von der ersten Rußabbrandphase zur zweiten Rußabbrandphase unterbunden, wenn sich die Brennkraftmaschine im Schubbetrieb, im Leerlaufbetrieb oder in einem Betriebszustand mit geringer Last befindet. In den genannten Betriebszuständen kann die Wärmeabfuhr aufgrund des geringen Abgasdurchsatzes zu niedrig sein, so dass es bei einer vergleichsweise hohen Rußabbrandrate zu einer unzulässigen Überhitzung des Partikelfilters kommen kann. Durch die erfindungsgemäße Vorgehensweise werden daher Schädigungen des Partikelfilters vermieden. Ferner können bei einem Übergang von einem Lastbetrieb in einen Schub- bzw. Leerlaufbetrieb infolge von Trägheitseffekten der Strömung im Abgasstrang unerwünschte Bedingungen auftreten, so dass insbesondere ein Zusammentreffen dieses Betriebszustandes der Brennkraftmaschine mit einem Übergang zur zweiten Phase vermieden werden sollte. Auf diese Weise wird sichergestellt, dass zunächst ein jederzeit kontrollierbarer Abbrand stattfindet und der Übergang zu einem beschleunigten Abbrand zum einen vorzugsweise nur unter günstigen Bedingungen und zum anderen bei einer unkritischen, reduzierten Partikelfilter- (Rest-) Beladung erfolgt, bei der eine unkontrollierbare Reaktion nicht oder wenigstens nur bei reduzierten Mengenverhältnissen stattfindet.

Ein Abgasreinigungssystem sowie ein Kraftfahrzeug zur Durchführung des erfindungsgemäßen Verfahrens sind in den Ansprüchen 9 und 10 umschrieben. Bei den genannten Vorrichtungen ist vorteilhaft sichergestellt, dass eine zuverlässige und gegen unkontrollierbare chemische Reaktionen geschützte Regeneration durchführbar ist.

Weitere Vorteile, Merkmale und vorteilhafte Weiterbildungen des Erfindungsgegenstandes ergeben sich aus der folgenden Beschreibung.

Die Erfindung betrifft eine Brennkraftmaschine für ein Kraftfahrzeug, insbesondere eine nach dem Diesel-Prozess arbeitende Hubkolben-Brennkraftmaschine oder eine nach dem Otto-Prozess arbeitende Hubkolben-Brennkraftmaschine mit Kraftstoff-Direkteinspritzung. Der Brennkraftmaschine ist ein Abgasstrang zugeordnet, über den Verbrennungsprodukte an die Umgebung abführbar sind. Im Abgasstrang sind ein oder mehrere Abgasreinigungssysteme angeordnet, die zur Zurückhaltung und chemischen Umsetzung bestimmter Bestandteile des Abgases bestimmt sind.

Als ein wesentliches Abgasreinigungssystem ist ein Partikelfilter bzw. -Abscheider zur Entfernung von Partikeln, insbesondere Ruß aus dem Abgas zu nennen. In dem Partikelfilter sammelt sich beim Betrieb des Kraftfahrzeuges eine gewisse Menge an abgeschiedenen Partikeln an, die kontinuierlich oder periodisch, d.h. in mehr oder weniger regelmäßigen Abständen, beseitigt werden müssen. Zur Beseitigung des abgeschiedenen Rußes oder rußähnlicher Stoffe ist eine chemische Umsetzungsreaktion (Oxidation, Abbrand) bei erhöhten Temperaturen, eine so genannte Regeneration, vorgesehen. Das erforderliche Temperaturniveau hängt u.a. von der Konsistenz der Partikel, einer gegebenenfalls vorhandenen katalytischen Beschichtung des Filters, dem Sauerstoffgehalt und Massenstrom des Abgases, und der Konfiguration der Abgasanlage ab. Dem Partikelfilter ist optional ein Additivierungssystem zugeordnet, mit dem ein Additiv vorzugsweise in den Kraftstoff der Brennkraftmaschine oder eventuell auch in den Abgasstrang einbringbar ist, mittels dessen die zur Regeneration des Partikelfilters erforderliche Temperatur ebenfalls beeinflusst, d.h. reduziert wird.

Bei der Regeneration werden die angesammelten Partikel, die zu einem großen Teil aus Kohlenstoff bzw. Kohlenstoffverbindungen bestehen, exotherm verbrannt, so dass ein zusätzlicher Wärmeenergieeintrag in den Filter stattfindet. Je nach vorliegenden Randbedingungen kann eine begonnene Reaktion somit ohne äußere Zufuhr von Energie weiter ablaufen. Als Folge ist eine u.U. unkontrollierbare, lawinenartige Umsetzungsreaktion zu nennen, bei der hohe Temperaturspitzen und -gradienten auftreten können, die beispielsweise infolge von Spannungs/Dehnungseffekten eine Schädigung des Filtermaterials bzw. einer Filterbeschichtung verursachen können.

Die Gefahr einer unkontrollierbaren Umsetzungsreaktion hängt u.a. ab von folgenden Faktoren:
Menge der abgeschiedenen Partikel (Beladung, Ausgangsstoffe für chemische Reaktion);
Zusammensetzung des Abgases (Sauerstoff- und Kohlenwasserstoffgehalt, Ausgangsstoffe für chemische Reaktion);
Massenstrom des Abgases (Austausch von Stoffen und Wärme vom/zum Partikelfilter);
Temperatur vor/im Partikelfilter (äußere Wärmezufuhr, Startbedingung für unkontrollierbare Umsetzungsreaktion);
Zufuhr von Additiven und Beschichtungen im Partikelfilter und dergleichen (optionale katalytisch wirksame Elemente).

Um eine unkontrollierbare Umsetzungsreaktion im Partikelfilter bzw. -Abscheider zu verhindern, wird erfindungsgemäß ein Regenerationsverfahren vorgenommen, bei dem der Rußabbrand in der Regeneration in mehrere, d.h. mindestens zwei Phasen unterteilt ist. In einer ersten Rußabbrandphase wird dabei die Regeneration bei vergleichsweise moderaten Temperaturen in einem Bereich von 580°C bis 620°C begonnen. Die Temperatur wird unter Berücksichtigung des Sauerstoffgehalts des Abgases, des Abgasmassenstroms und gegebenenfalls weiterer die Rußabbrandgeschwindigkeit beeinflussenden Größen so gewählt, dass auch unter ungünstigen Bedingungen keine unkontrollierbare Reaktion stattfinden kann, aber dennoch ein möglichst guter Abbrand erfolgt. Je nach Größe und Typ des Filters wird eine Rußabbrandgeschwindigkeit eingestellt, die einer Abnahme der Rußbeladung um 1g je Liter Filtervolumen in etwa 0,5min bis 4min entspricht.

Bei einer Verwendung von Additiven und/oder Filterbeschichtungen können für die erste Phase niedrigere Temperaturen in einem Bereich von 450°C bis 550°C vorgesehen werden. Eine Vorgehensweise zur Einstellung der Temperatur vor/im Filter insbesondere mit motorseitigen Maßnahmen ist allgemein bekannt und kann beispielhaft aus den eingangs erwähnten Druckschriften ersehen werden.

Nach einem Abbrand einer definierten Menge an Partikeln, insbesondere Ruß, kann in einem oder mehreren Schritten oder kontinuierlich eine Umschaltung auf eine zweite Rußabbrandphase der Regeneration vorgenommen werden. Vorteilhaft ist es die Umschaltung vorzunehmen, wenn die Restbeladung des Filters einen Wert von etwa 7g Ruß je Liter Filtervolumen unterschreitet. Vorzugsweise wird die Umschaltung bei Unterschreitung einer Restbeladung von etwa 5g/l, besonders bevorzugt bei etwa 4g/l vorgenommen. Der Wert wird vorzugsweise so gewählt, dass auch bei einem unkontrollierten Rußabbrand in der zweiten Rußabbrandphase die dabei auftretende Temperaturbelastung bzw. Wärmebelastung nicht zu einer Schädigung des Partikelfilters führen kann. Dieser Wert ist naturgemäß auch abhängig vom Filtermaterial, wobei für einen SiC-Filter höhere Werte zugelassen werden können als für einen Cordieritfilter.

Die Umschaltung von der ersten Rußabbrandphase in die zweite Rußabbrandphase kann jedoch auch zeitgesteuert erfolgen. Dabei wird vorzugsweise die Rußabbrandgeschwindigkeit in Abhängigkeit von den wesentlichen Einflussgrößen vorab ermittelt und in der Regelungs-/Steuereinrichtung abgespeichert. Auf diese Weise kann in Abhängigkeit von den jeweiligen Betriebsbedingungen die Rußabbrandgeschwindigkeit in der ersten und in der zweiten Rußabbrandphase genau eingestellt werden, und die Umschaltung zu einem vorgebbaren Zeitpunkt bzw. nach einer vorgebbaren Dauer oder einem vorgebbaren Abbrandergebnis der ersten Rußabbrandphase vorgenommen werden. Ebenfalls vorteilhaft ist es, bei der Festlegung des Umschaltzeitpunkts bzw. bei der Dauer der ersten Rußabbrandphase die Gesamtbeladung des Partikelfilters zu Beginn des Regenerationsvorgangs zu berücksichtigen. Die Umschaltung kann jedoch auch generell bei Vorliegen eines vorgebbaren Abbrandergebnisses von beispielsweise 2g/l bis 5g/l vorgenommen werden.

Die Temperatur vor/im Filter soll in der zweiten Rußabbrandphase oberhalb der Temperatur in der ersten Phase, und zwar (ohne Verwendung eines Additivs) in einem Bereich zwischen 620°C und 800°C liegen. Damit ergibt sich eine entsprechend größere Rußabbrandgeschwindigkeit. Die Temperatur wird so gewählt, dass ein möglichst schneller und effektiver Abbrand erzielt wird. Vorzugsweise werden die Bedingungen, insbesondere die Abgastemperatur und der Sauerstoffgehalt des Abgases so eingestellt, dass sich eine etwa 2-mal bis 5-mal höhere Rußabbrandgeschwindigkeit als in der ersten Rußabbrandphase ergibt. Dabei ist wegen der bereits zuvor abgelaufenen ersten Rußabbrandphase die Gefahr einer unkontrollierbaren Umsetzungsreaktion vermindert und/oder die Temperatureffekte sind auf ein Maß begrenzt, das eine Schädigung des Filtermaterials oder der Beschichtung ausschließt. Dies ist insbesondere deshalb gegeben, weil durch die erste Rußabbrandphase die Menge der abgeschiedenen Partikel als Ausgangsstoffe für eine eventuelle unkontrollierbare Reaktion vermindert wurde. Vorzugsweise erfolgt deshalb eine Umschaltung von der ersten zur zweiten Rußabbrandphase in Abhängigkeit vom Beladungszustand vor, während und/oder nach der ersten Rußabbrandphase der Regeneration.

Der Beladungszustand des Partikelfilters kann beispielsweise durch eine geeignete Sensorik und/oder ein entsprechendes Rechenmodell ermittelt bzw. abgeschätzt werden. Es sind eine Mindestabbrandmenge in der ersten Rußabbrandphase und/oder eine maximale Restbeladung des Partikelfilters oder - Abscheiders als zu erfüllende Randbedingung zu fordern, um sicherzustellen, dass in der zweiten Rußabbrandphase trotz hoher Reaktionsraten ein Auftreten unerwünschter Temperaturspitzen vermieden wird. Letzteres ist insbesondere dann gewährleistet, wenn die Filterbeladung weniger als 50% ihres Maximums beträgt. Alternativ oder ergänzend kann eine zeitliche Abschätzung der Regeneration in der ersten Rußabbrandphase vorgenommen werden und in eine Mindestzeitdauer als zu erfüllende Randbedingung für die erste Phase umgerechnet werden, so dass eine Umschaltung auf die zweite Phase ggf. zusätzlich in Abhängigkeit von der Zeit vorgenommen werden kann. Eine Herabsetzung der Temperatur durch die Verwendung von Additiven ist möglich.

Vorteilhaft ist es, eine Umschaltung von der ersten zur zweiten Rußabbrandphase der Regeneration zusätzlich in Abhängigkeit vom Betriebszustand der Brennkraftmaschine vorzunehmen. Da der Betriebszustand der Brennkraftmaschine maßgeblichen Einfluss auf die Zusammensetzung und den Massenstrom des Abgases hat, werden damit wesentliche Einflussfaktoren der Regeneration berücksichtigt. Eine Umschaltung wird vorzugsweise unterbunden, wenn sich die Brennkraftmaschine im Leerlaufbetrieb oder in einem Betriebszustand niedriger Last oder im Schubbetrieb befindet oder in einen dieser Betriebszustände übergeht. Es wird ein "Zusammentreffen" von hohen Temperaturen im Partikelfilter und Betriebszuständen niedriger Last der Brennkraftmaschine vermieden. Damit wird sichergestellt, dass die zweite Rußabbrandphase der Regeneration nicht begonnen wird, solange geringe Abgasmassenströme und/oder hohe Sauerstoffkonzentrationen im Abgas vorliegen.

In vorteilhafter Weise werden durch die vorgeschlagenen Maßnahmen bei einem Abgasreinigungssystem mit einem in einer Abgasleitung einer Kraftfahrzeug-Brennkraftmaschine angeordneten Partikelfilter oder -Abscheider sowie einer Regelungs/Steuerungsvorrichtung, die eine periodische Regeneration des Partikelfilters oder -Abscheiders veranlasst, längere Regenerationsintervalle, d.h. Abstände zwischen zwei Regeneration und zugleich sicherere Regenerationsprozesse erzielt. Insbesondere sind höhere Beladungsmengen zulässig, weil der Abbrand in kurzer Zeit bei zugleich besonders geringer thermischer Beanspruchung des Filters stattfinden kann. Eine Gefahr von Filterschäden durch unkontrollierte Exothermie und thermisch induzierte Spannungen wird insbesondere auch bei beschichteten Filtern bzw. Abscheidern nachhaltig reduziert.

Durch längere Regenerationsintervalle wird nicht nur die Lebensdauer des Partikelfilters selbst, sondern auch diejenige weiterer Filter oder Katalysatoren im Abgasstrang, insbesondere die Lebensdauer eines dem Filter vorgeschalteten Oxidationskatalysators verlängert.

Die Merkmale der lediglich beispielhaft beschriebenen Ausführungsbeispiele des erfindungsgemäßen Verfahrens und dessen Anwendung in einem Kraftfahrzeug lassen sich nahezu beliebig miteinander kombinieren, so dass sich weitere vorteilhafte Merkmale und Merkmalskombinationen ergeben können.

## Patentansprüche

1. Verfahren zur Regeneration eines Partikelfilters oder
- Abscheiders im Abgastrakt einer Brennkraftmaschine, bei dem mittels einer Regelungs-/ Steuerungsvorrichtung eine periodische Regeneration des Partikelfilters oder
- Abscheiders vorgenommen wird,
**dadurch gekennzeichnet,**
**dass** die Regeneration eine erste Rußabbrandphase und eine zweite Rußabbrandphase umfasst, wobei von der Regelungs-/Steuerungsvorrichtung in der ersten Rußabbrandphase eine erste Rußabbrandgeschwindigkeit und in der zweiten Rußabbrandphase eine gegenüber der ersten Rußabbrandgeschwindigkeit höhere, zweite Rußabbrandgeschwindigkeit eingestellt wird.

2. Verfahren nach Anspruch 1,
**dadurch gekennzeichnet,**
**dass** die zweite Rußabbrandphase in einem gegenüber der ersten Rußabbrandphase höheren Temperaturbereich durchgeführt wird.

3. Verfahren nach Anspruch 1 oder 2,
**dadurch gekennzeichnet,**
**dass** die zweite Rußabbrandphase bei einem gegenüber der ersten Rußabbrandphase höheren Sauerstoffgehalt des Abgases durchgeführt wird.

4. Verfahren nach einem der vorhergehenden Ansprüche,
**dadurch gekennzeichnet,**
**dass** eine Umschaltung von der ersten Rußabbrandphase zur zweiten Rußabbrandphase in Abhängigkeit von der Beladung des Partikelfilters oder -Abscheiders vorgenommen wird.

5. Verfahren nach einem der vorhergehenden Ansprüche,
**dadurch gekennzeichnet,**
**dass** eine Umschaltung von der ersten Rußabbrandphase zur zweiten Rußabbrandphase in Abhängigkeit von der Zeit vorgenommen wird, insbesondere nach Ablauf einer vorgebbaren Mindestzeitspanne für die erste Rußabbrandphase der Regeneration.

6. Verfahren nach einem der vorhergehenden Ansprüche,
**dadurch gekennzeichnet,**
**dass** die erste Rußabbrandphase der Regeneration bei Temperaturen zwischen 450°C und 650°C, insbesondere vorzugsweise bei Verwendung eines Additivs zwischen 450°C und 550°C durchgeführt wird.

7. Verfahren nach einem der vorhergehenden Ansprüche,
**dadurch gekennzeichnet,**
**dass** die zweite Rußabbrandphase der Regeneration bei einer Temperatur zwischen 620°C und 800°C, insbesondere vorzugsweise mit Verwendung eines Additivs zwischen 550°C und 650°C durchgeführt wird.

8. Verfahren nach einem der vorhergehenden Ansprüche,
**dadurch gekennzeichnet,**
**dass** eine Umschaltung von der ersten Rußabbrandphase zur zweiten Rußabbrandphase der Regeneration unterbunden wird, wenn sich die Brennkraftmaschine im Schubbetrieb, im Leerlaufbetrieb oder in einem Betriebszustand mit geringer Last befindet.

9. Abgasreinigungssystem, insbesondere zur Durchführung eines Verfahrens nach einem der vorhergehenden Ansprüche, mit einem in einer Abgasleitung einer Brennkraftmaschine angeordneten Partikelfilter oder -Abscheider sowie einer Regelungs-/Steuerungsvorrichtung, die eine periodische Regeneration des Partikelfilters oder -Abscheiders veranlasst,
**dadurch gekennzeichnet,**
**dass** eine erste Phase der Regeneration mit einer ersten Rußabbrandgeschwindigkeit und
eine zweite Phase der Regeneration mit einer zweiten Rußabbrandgeschwindigkeit durchgeführt werden, wobei
die zweite Rußabbrandgeschwindigkeit höher ist als die erste Rußabbrandgeschwindigkeit, und bei dem
eine Umschaltung von der ersten Phase zur zweiten Phase in Abhängigkeit von dem Beladungszustand des Partikelfilters oder -Abscheiders vorgenommen wird.

10. Abgasreinigungssystem nach Anspruch 9,
**dadurch gekennzeichnet,**
**dass** dem Partikelfilter oder -Abscheider ein Additivierungs-system zur Zufuhr eines Additivs in den zur Verbrennung in der Brennkraftmaschine vorgesehenen Kraftstoff oder in die Abgasleitung bzw. in den Partikelfilter oder -Abscheider zugeordnet ist.

11. Kraftfahrzeug mit einem Abgasreinigungssystem nach Anspruch 9 oder 10, insbesondere zur Durchführung des Verfahrens nach einem der Ansprüche 1 bis 8.
